# EUROPÄISCHE PATENTSCHRIFT

(11) **EP 2 250 468 B1**
(45) Veröffentlichungstag und Bekanntmachung des Hinweises auf die Patenterteilung: **06.05.2015**
(21) Anmeldenummer: 09715582.4
(22) Anmeldetag: 20.01.2009
(51) Int. Cl.: G01D 5/251, B60K 15/06, G01F 23/36

(54) **MAGNETISCHER PASSIVER POSITIONSSENSOR**
MAGNETIC PASSIVE POSITION SENSOR
CAPTEUR DE POSITION PASSIF MAGNÉTIQUE

(30) Priorität: 28.02.2008 DE 102008011713
(43) Veröffentlichungstag der Anmeldung: 17.11.2010
(73) Patentinhaber: Continental Automotive GmbH, 30165 Hannover (DE)
(72) Erfinder: BENNER, Hans-Guenter, 65830 Kriftel (DE); PAUER, Bernd, 65817 Eppstein (DE)
(86) Internationale Anmeldenummer: PCT/EP2009/050605
(87) Internationale Veröffentlichungsnummer: WO 2009/106381

(56) Entgegenhaltungen:
- DE-B3-102004 004 102
- US-A- 6 127 916

## Beschreibung

Gegenstand der Erfindung ist ein magnetischer passiver Positionssensor mit einer Grundplatte und einem Deckel, die ein Gehäuse bilden, einem außerhalb des Gehäuses bewegbaren Magneten, mit einem innerhalb des Gehäuses angeordneten Widerstandsnetzwerk, welches mehrere einzelne, elektrische Kontakte besitzt, mit einer Vielzahl von im Bewegungsbereich des Magneten angeordneten Kontaktfederelementen, die über einen gemeinsamen Grundkörper miteinander verbunden sind und aus einem Biegebereich und einem Kontaktbereich bestehen, wobei die Kontaktfederelemente den Kontakten des Widerstandsnetzwerkes derart gegenüberstehen, dass die Kontaktbereiche von dem Magneten gegen die Kontakte des Widerstandsnetzwerkes bewegbar sind, wobei jedem einzelnen Kontakt des Widerstandsnetzwerkes die Kontaktbereiche zumindest zweier Kontaktfederelemente zugeordnet sind.

Ein solcher Positionssensor ist aus der DE 10 2004 004 102 B3 bekannt und wird bei Füllstandsmessern in Kraftstoffbehältern heutiger Kraftfahrzeuge eingesetzt. Der Positionssensor erzeugt in Abhängigkeit von der Stellung des Magneten elektrische Signale. Das Vorsehen von zumindest zwei Zungen, die jedem einzelnen Kontakt des Widerstandsnetzwerkes gegenüberstehen, soll gewährleistet werden, dass bei anhaftenden Schmutzpartikeln zumindest eine der beiden Zungen eine Verbindung mit dem Kontakt herstellt. Aufgrund von magnetischen Einflüssen auf den Positionssensor können Querkräfte entstehen, die auf die Kontaktfederelemente einwirken. Als Folge davon kann es zu einer seitlichen Verschiebung einzelner Zungen der Kontaktfederelemente kommen, so dass an einem einzelnen Kontakt drei Zungen oder nur eine Zunge eine Verbindung mit dem jeweiligen Kontakt eingeht. In den Fällen, in denen mit einem Kontakt nur eine Zunge in Verbindung tritt, ist die Redundanz nicht mehr gegeben. Um eventuelle Ausfälle oder Fehlanzeigen während des Einsatzes zu vermeiden, werden die Positionssensoren entsprechend geprüft und fehlerhafte Positionssensoren aussortiert.

Der Erfindung liegt daher die Aufgabe zugrunde, einen magnetischen passiven Positionssensor zu schaffen, der unabhängig von störenden magnetischen Einflüssen eine Redundanz bei der Kontaktierung der Zungen mit dem jeweiligen Kontakt des Widerstandsnetzwerkes aufweist, indem bei entsprechender Stellung des Magneten mindestens zwei Zungen mit jeweils einem Kontakt in Verbindung stehen.

Gelöst wird die Aufgabe erfindungsgemäß dadurch, dass jeweils zwei benachbarte Kontaktfederelemente in ihren Biegebereichen mechanisch miteinander verbunden sind. Mit der Anordnung einer Verbindung zwischen zwei benachbarten Kontaktfederelementen wird die freie Beweglichkeit jedes Kontaktfederelementes in der Ebene, in der sie angeordnet sind, stark eingeschränkt. Diese Einschränkung der Beweglichkeit ist so stark, dass bisweilen auftretende Querkräfte nicht mehr zu einem Auslenken der Kontaktfederelemente in der Ebene führen. Die Beweglichkeit der Kontaktfederelemente in Richtung der Kontakte des Widerstandsnetzwerkes und somit senkrecht zu der Ebene ihrer Anordnung bleibt dagegen unverändert erhalten.

In einer einfachen Ausgestaltung sind jeweils zwei Kontaktfederelemente, die einem Kontakt zugeordnet sind, in ihren Biegebereichen mechanisch miteinander verbunden. Der Vorteil dieser Ausgestaltung besteht darin, dass durch die Verbindung zweier Kontaktfederelemente eine Koppelung stattfindet, die ebenfalls senkrecht zu der Ebene, in der die Kontaktfederelemente angeordnet sind, wirkt. Sobald ein Kontaktfederelement von dem Magnetfeld des Magneten in Richtung des Kontaktes des Widerstandsnetzwerkes ausgelenkt wird, erfolgt durch die Verbindung bereits ein geringfügiges Auslenken des zweiten gekoppelten Kontaktfederelements obwohl es noch nicht dem Einfluss des Magnetfeldes in dieser Größenordnung unterliegt.

In einer anderen Ausgestaltung kann die Koppelung zweier benachbarter Kontaktfederelemente auch derart erfolgen, dass die Verbindung in ihren Biegebereichen zwischen zwei Kontaktfederelementen angeordnet ist, von denen jedes jeweils einem Kontakt zugeordnet ist.

Die Beweglichkeit der Kontaktfederelemente in Richtung der Kontakte des Widerstandsnetzwerkes und somit senkrecht zu der Ebene in der sie angeordnet sind, wird nur gering beeinflusst, wenn der Abstand der Verbindung zwischen zwei Kontaktfederelemente zum Grundkörper kleiner als die Hälfte der Länge des Biegebereichs eines Kontaktfederelementes ist.

Gemäß einer anderen Ausgestaltung sind die Kontaktfederelemente stark miteinander gekoppelt, wenn die Verbindung zwischen zwei Kontaktfederelementen im Kontaktbereich angeordnet ist.

Eine ausreichende Festigkeit der Verbindung zweier Kontaktfederelemente ist gegeben, wenn die Breite der Verbindung mindestens so groß ist wie die Breite des Biegebereichs.

Die Verbindung lässt sich auf vielfältige Weise realisieren. In einfacher Weise lässt sie sich herstellen, wenn sie als separates Teil, vorzugsweise als Steg, ausgebildet ist, welches mit den Kontaktfederelementen verbunden ist. Die Verbindung kann in anderen Ausgestaltungen kraft- und/oder formschlüssig ausgebildet sein, indem die Kontaktfederelemente durch Bonden, Löten, Umbördeln oder Einhaken in am Steg vorgesehenen Raststellen verbunden sind.

Ein separates Herstellen der Verbindung mit der anschließenden Montage wird in einer anderen vorteilhaften Ausgestaltung dadurch vermieden, dass die Verbindung zwischen zwei Kontaktfederelementen einteilig mit diesen verbunden ist. Diese Art der Verbindung hat den Vorteil, dass die Verbindungen zwischen zwei Kontaktfederelementen gleichzeitig mit der Herstellung der Kontaktfederelemente erzeugt werden, so dass kein weiterer Arbeitsschritt notwendig ist. Die Herstellung der Kontaktfederelemente und der Verbindungen kann vorzugsweise durch Ätzen, Stanzen oder Laserschneiden erfolgen.

Gemäß einer weiteren vorteilhaften Ausgestaltung kann die Vermeidung einer Auslenkung durch Querkräfte zusätzlich zu der Verbindung dadurch unterstützt werden, dass die Kontaktfederelemente in ihren Biegebereichen eine Struktur, vorzugsweise ein L-Profil oder ein U-Profil besitzen, die einer derartigen Auslenkung entgegenwirken. Ein derartiges Profil in den Biegebereichen der Kontaktfederelemente lässt sich in einfacher Weise durch einen unmittelbar an die Herstellung der Kontaktfederelemente anschließenden Umformvorgang herstellen. Darüber hinaus ist es denkbar, die Verbindung zwischen jeweils zwei Kontaktfederelementen einzusparen, sofern die Struktur der Biegebereiche einen ausreichenden Widerstand gegen Querkräfte aufweist.

An mehreren Ausführungsbeispielen wird die Erfindung näher erläutert. Dabei zeigen:
- Figur 1: einen magnetischen passiven Positionssensor nach dem Stand der Technik,
- Figur 2: Kontaktfederelemente des magnetischen passiven Positionssensors nach Figur 1,
- Figur 3: Kontaktfederelemente eines erfindungsgemäßen magnetischen passiven Positionssensors.

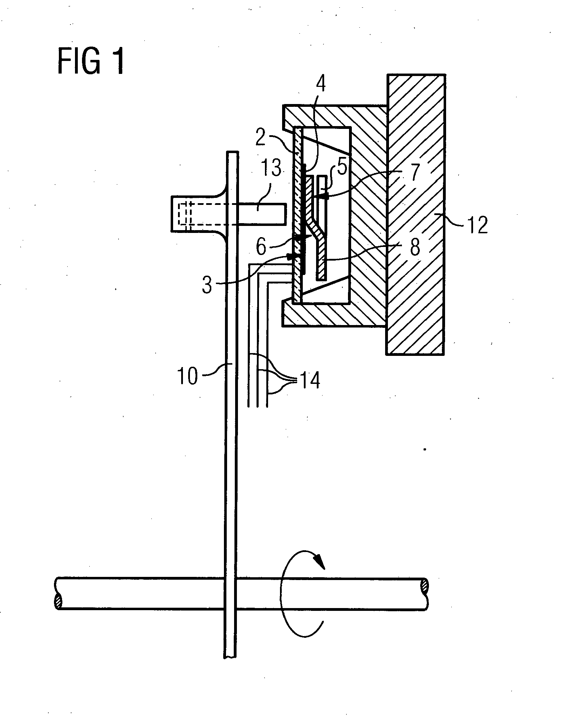

Der magnetische passive Positionssensor 1 in Figur 1 besteht aus einer nichtleitenden Grundplatte 2, vorzugsweise einer Keramik. Auf der Grundplatte 2 ist ein Widerstandsnetzwerk 3 in Dickschichttechnologie mit mehreren einzelnen elektrischen Kontakten 4 aufgebracht. Den Kontakten 4 gegenüberstehend sind Kontaktfederelemente 5 angeordnet, welche einen Biegebereich 6 und einen Kontaktbereich 7 besitzen. Die Kontaktfederelemente 5 sind durch einen gemeinsamen Grundkörper 8 miteinander verbunden. Mittels eines mit der Grundplatte 2 verlöteten metallischen Deckels 9 ist das Widerstandsnetzwerk 3 gegen die Umgebung abgedichtet. Der dem Deckel 9 abgewandten Seite der Grundplatte 2 gegenüberliegend ist ein Hebelarm 10 eines Füllstandsgebers 11 angeordnet, wobei der Füllstandsgeber 11 im Innern eines Kraftstoffbehälters 12 angeordnet ist. An dem Hebelarm 10 ist ein Magnet 13 derart befestigt, dass er beim Verschwenken des Hebelarms 10 den Bereich der Kontakte 4 überstreicht, wodurch die Kontaktfederelemente 5 gegen die Kontakte 4 bewegt werden und so ein elektrisches Signal in Abhängigkeit vom Schwenkwinkel des Hebelarms 10 erzeugt wird, welches über elektrische Leitungen 14 aus dem Kraftstoffbehälter 12 einer Auswerteeinheit zugeführt wird.

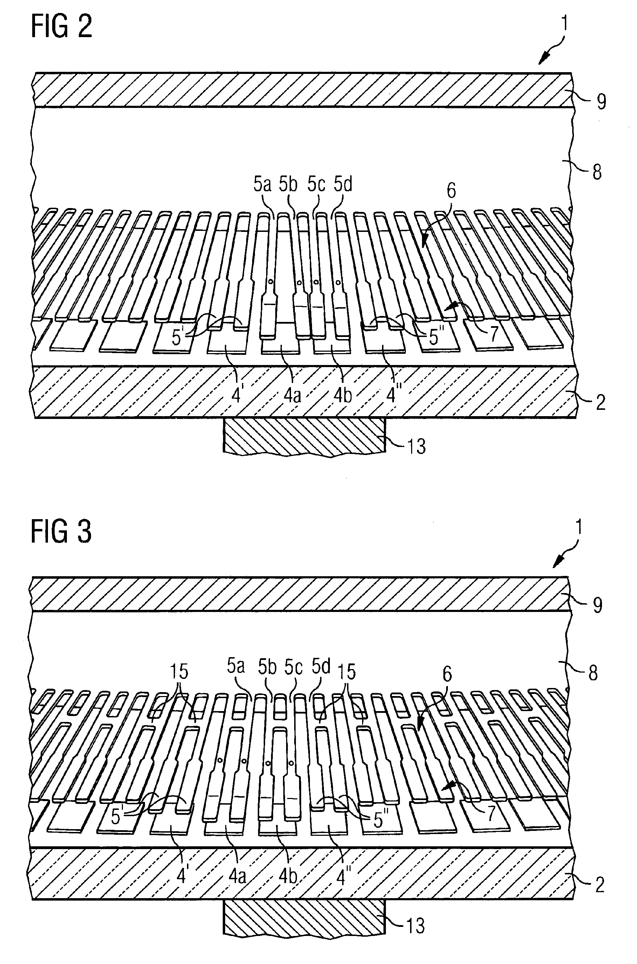

Figur 2 zeigt eine stark vergrößerte Ansicht des Positionssensors 1. Auf der Grundplatte 2 sind von dem Widerstandsnetzwerk zur besseren Darstellung lediglich die Kontakte 4 gezeigt. Über den Kontakten 4 sind die Kontaktfederelemente 5 mit dem Grundkörper 8 angeordnet. Der Biegebereich 6 ist zum besseren Auslenken schmaler als der Kontaktbereich 7 gestaltet. Für eine Redundanz sind immer zwei Kontaktfederelemente 5 einem Kontakt 4 gegenüberliegend vorgesehen. Unterhalb der Grundplatte 2 ist der Magnet 13 angeordnet. Durch das Magnetfeld werden die Kontaktfederelemente 5a-d gegen die Kontakte 4a, 4b gezogen. Die jeweils benachbarten Kontaktfederelemente 5', 5" werden aufgrund des in diesen Bereichen schwächer werdenden Magnetfeldes nur gering ausgelenkt, ohne die Kontakte 4', 4" zu berühren. Aufgrund von Querkräften wird das Kontaktfederelement 5b in Richtung des Kontaktes 4b ausgelenkt.

In Figur 3 ist der erfindungsgemäße Positionssensor in einer Ansicht gemäß Figur 2 dargestellt. Der Positionssensor unterscheidet sich in den Kontaktfederelementen 5. jeweils zwei Kontaktfederelemente 5 sind in ihren Biegebereichen 6 durch einen Steg 15 mechanisch miteinander verbunden. Der Steg 15 ist wie der Grundkörper 8 einteilig mit den Kontaktfederelementen verbunden. Treten wie in Figur 2 beschrieben Querkräfte auf, verhindert der Steg 15 das unerwünschte Auslenken der Kontaktfederelemente 5. Die Kontaktfederelemente 5 treten somit trotz vorhandener Querkräfte ausschließlich mit dem ihnen gegenüberliegenden Kontakt 4 in Verbindung.

## Patentansprüche

1. Magnetischer passiver Positionssensor mit einer Grundplatte und einem Deckel, die ein Gehäuse bilden, einem außerhalb des Gehäuses bewegbaren Magneten, mit einem innerhalb des Gehäuses angeordneten Widerstandsnetzwerk, welches mehrere einzelne, elektrische Kontakte besitzt, mit einer Vielzahl von im Bewegungsbereich des Magneten angeordneten Kontaktfederelementen, die über einen gemeinsamen Grundkörper miteinander verbunden sind und aus einem Biegebereich und einem Kontaktbereich bestehen, wobei die Kontaktfederelemente den Kontakten des Widerstandsnetzwerkes derart gegenüberstehen, dass die Kontaktbereiche von dem Magneten gegen die Kontakte des Widerstandsnetzwerkes bewegbar sind, wobei jedem einzelnen Kontakt des Widerstandsnetzwerkes die Kontaktbereiche zumindest zweier Kontaktfederelemente zugeordnet sind,
**dadurch gekennzeichnet, dass** jeweils zwei benachbarte Kontaktfederelemente (5a-5d) in ihren Biegebereichen (6) mechanisch miteinander verbunden sind.

2. Magnetischer passiver Positionssensor nach Anspruch 1,
**dadurch gekennzeichnet, dass** jeweils zwei Kontaktfederelemente (5a, 5b; 5c, 5d), die einem Kontakt (4a; 4b) zugeordnet sind, in ihren Biegebereichen (6) mechanisch miteinander verbunden sind.

3. Magnetischer passiver Positionssensor nach Anspruch 1,
**dadurch gekennzeichnet, dass** jeweils zwei benachbarte Kontaktfederelemente (5b, 5c), von denen jedes jeweils einem Kontakt (4a; 4b) zugeordnet ist, in ihren Biegebereichen (6) mechanisch miteinander verbunden sind.

4. Magnetischer passiver Positionssensor nach einem der hervorgehenden Ansprüche, **dadurch gekennzeichnet, dass** der Abstand der Verbindung (15) zwischen zwei Kontaktfederelementen (5) zum Grundkörper (8) kleiner als die Hälfte der Länge des Biegebereichs (6) eines Kontaktfederelementes (5) ist.

5. Magnetischer passiver Positionssensor nach Anspruch 4,
**dadurch gekennzeichnet, dass** die Verbindung (15) zwischen zwei Kontaktfederelementen (5) mindestens die gleiche Breite wie die Breite des Biegebereichs (6) besitzt.

6. Magnetischer passiver Positionssensor nach einem der vorhergehenden Ansprüche, **dadurch gekennzeichnet, dass** die Verbindung (15) zwischen zwei Kontaktfederelementen (5) ein separates Teil ist, welches mit den Kontaktfederelementen (5) verbunden ist.

7. Magnetischer passiver Positionssensor nach einem der Ansprüche 1 bis 6, **dadurch gekennzeichnet, dass** die Verbindung (15) zwischen zwei Kontaktfederelementen (5) einteilig mit diesen verbunden ist.

## Claims

1. Magnetic passive position sensor with a base plate and a cover which form a housing, a magnet which is capable of being moved outside the housing, with a resistance network which is arranged within the housing and has a plurality of individual electrical contacts, with a large number of contact spring elements which are arranged in the movement range of the magnet, are connected to one another via a common basic body and comprise a bending region and a contact region, the contact spring elements being positioned opposite the contacts of the resistance network in such a way that the contact regions are capable of being moved by the magnet against the contacts of the resistance network, the contact regions of at least two contact spring elements being assigned to each individual contact of the resistance network, **characterized in that** in each case two adjacent contact spring elements (5a-5d) are connected to one another mechanically in their bending regions (6).

2. Magnetic passive position sensor according to Claim 1, **characterized in that** in each case two contact spring elements (5a, 5b; 5c, 5d), which are assigned to a contact (4a; 4b), are connected to one another mechanically in their bending regions (6).

3. Magnetic passive position sensor according to Claim 1, **characterized in that** in each case two adjacent contact spring elements (5b, 5c), each of which is assigned to in each case one contact (4a; 4b), are connected to one another mechanically in their bending regions (6).

4. Magnetic passive position sensor according to one of the preceding claims, **characterized in that** the distance of the connection (15) between two contact spring elements (5) from the basic body (8) is smaller than half the length of the bending region (6) of a contact spring element (5).

5. Magnetic passive position sensor according to Claim 4, **characterized in that** the connection (15) between two contact spring elements (5) has at least the same width as the width of the bending region (6).

6. Magnetic passive position sensor according to one of the preceding claims, **characterized in that** the connection (15) between two contact spring elements (5) is a separate part, which is connected to the contact spring elements (5).

7. Magnetic passive position sensor according to one of Claims 1 to 6, **characterized in that** the connection (15) between two contact spring elements (5) is connected integrally to said contact spring elements (5).

## Revendications

1. Capteur de position magnétique passif comprenant une plaque de base et un couvercle, qui forment un boîtier, un aimant pouvant être déplacé à l'extérieur du boîtier, un réseau de résistances, qui est disposé à l'intérieur du boîtier et qui a plusieurs contacts électriques individuels, une pluralité d'éléments de ressort de contact, qui sont disposés dans la zone de déplacement de l'aimant, qui sont reliés entre eux par une pièce de base commune et qui sont constitués d'une partie de flexion et d'une partie de contact, les éléments de ressort de contact étant opposés aux contacts du réseau de résistances, de manière à ce que les parties de contact puissent être déplacées par l'aimant, pour venir sur les contacts du réseau de résistances, dans lequel les parties de contact d'au moins deux éléments de ressort de contact sont associées à chaque contact individuel du réseau de résistances, **caractérisé en ce que** respectivement deux éléments (5a à 5d) de ressort de contact voisins sont reliés mécaniquement l'un à l'autre dans leurs parties (6) de flexion.

2. Capteur de position magnétique passif suivant la revendication 1, **caractérisé en ce que** deux éléments (5a, 5b ; 5c, 5d) de ressort de contact, qui sont associés respectivement à un contact (4a ; 4b), sont reliés mécaniquement entre eux dans leurs parties (6) de flexion.

3. Capteur de position magnétique passif suivant la revendication 1, **caractérisé en ce que** respectivement deux éléments (5b, 5c) de ressort de contact voisins, dont chacun est associé respectivement à un contact (4a ; 4b), sont reliés mécaniquement entre eux dans leurs parties (6) de flexion.

4. Capteur de position magnétique passif suivant l'une des revendications précédentes, **caractérisé en ce que** la distance de la liaison (15) entre deux éléments (5) de ressort de contact à la pièce (8) de base est plus petite que la moitié de la longueur de la partie (6) de flexion d'un élément (5) de ressort de contact.

5. Capteur de position magnétique passif suivant la revendication 4, **caractérisé en ce que** la liaison (15) entre deux éléments (5) de ressort de contact a au moins la même largeur que la largeur de la partie (6) de flexion.

6. Capteur de position magnétique passif suivant l'une des revendications précédentes, **caractérisé en ce que** la liaison (15) entre deux éléments (5) de ressort de contact est une partie distincte qui est reliée aux éléments (5) de ressort de contact.

7. Capteur de position magnétique passif suivant l'une des revendications 1 à 6, **caractérisé en ce que** la liaison (15) est reliée entre deux éléments (5) de ressort de contact d'une seule pièce avec ceux-ci.
